**Europäisches Patentamt**

**European Patent Office**

**Office européen des brevets**

(11) Veröffentlichungsnummer: **0 408 872 A2**

# (12) EUROPÄISCHE PATENTANMELDUNG

(21) Anmeldenummer: **90110040.4**

(22) Anmeldetag: **28.05.90**

(51) Int. Cl.5: **G01N 21/74**

(30) Priorität: **19.07.89 DE 3923822**

(43) Veröffentlichungstag der Anmeldung:
**23.01.91 Patentblatt 91/04**

(84) Benannte Vertragsstaaten:
**DE FR GB IT**

(71) Anmelder: **BODENSEEWERK PERKIN-ELMER GMBH**
**Askaniaweg 4**
**D-7770 Uberlingen/Bodensee(DE)**

(72) Erfinder: **Tamm, Rolf**
**Am Fohrenbühl 8**
**D-7777 Salem 2(DE)**
Erfinder: **Rödel, Günther**
**Hinter den Gärten 13**
**D-7776 Owingen(DE)**

(74) Vertreter: **Weisse, Jürgen, Dipl.-Phys. et al**
**Bökenbusch 41 Postfach 11 03 86**
**D-5620 Velbert 11-Langenberg(DE)**

(54) **Ofen zur elektrothermischen Atomisierung von Proben für spektroskopische Zwecke.**

(57) Die Fertigung eines Ofens zur elektrothermischen Atomisierung von Proben für spektroskopische Zwecke, der einen Hohlraum zur Aufnahme der Probe aufweist, soll vereinfacht und verbessert werden. Zu diesem Zweck besteht der Ofen aus zwei Hälften (10,76), die längs einer den Hohlraum schneidenden Trennfläche aneinandergesetzt sind. Der Ofen besteht aus Graphit und ist mit einer Beschichtung aus pyrolytischem Graphit versehen. Eine Plattform (42) zur Aufnahme der Probe ist als integraler Teil an ein der beiden Hälften angeformt ist. Ein Verfahren zur Herstellung eines solchen Ofens enthält die Verfahrensschritte: (a) Herstellung zweier Rohteile, die mit planen Flächen aneinanderliegen, (b) Bearbeiten der beiden Rohteile gemeinsam so daß ein von den Ebenen der planen Flächen geschnittener Hohlraum und aus jedem der Rohteile eine Ofenhälfte erzeugt wird, (c) Trennen der beiden so hergestellten Ofenhälften, (d) Beschichten der Ofenhälften in auseinandergenommenem Zustand, wobei die Innenfläche des Hohlraumes Außenflächen jeder der beiden Hälften bildet, und (e) Zusammensetzen so erzeugter Ofenhälften zu einem Ofen. Es wird auch ein Verfahren zur Verminderung von Ausschuß bei der Fertigung der Öfen beschrieben.

EP 0 408 872 A2

# OFEN ZUR ELEKTROTHERMISCHEN ATOMISIERUNG VON PROBEN FÜR SPEKTROSKOPISCHE ZWECKE

## Technisches Gebiet

Die Erfindung betrifft einen Ofen zur elektrothermischen Atomisierung von Proben für spektroskopische Zwecke, der einen Hohlraum zur Aufnahme der Probe aufweist.

Ein sehr empfindliches, quantitatives Analysenverfahren zur Bestimmung der Menge eines bestimmten gesuchten Elements in einer Probe ist die Atomabsorptions-Spektroskopie. Dabei wird eine Probe atomisiert, so daß die einzelnen Bestandteile der Probe in atomarer Form vorliegen und einen "Atomdampf" bilden. Durch diesen Atomdampf wird ein Meßlichtbündel geleitet. Dieses Meßlichtbündel geht von einer linienemittierenden Lichtquelle aus, welche die charakteristischen Resonanzlinien des gesuchten Elements emittiert. Ein solches Meßlichtbündel wird nur von den Atomen des gesuchten Elements absorbiert. Die Absorption des Meßlichtbündels in dem Atomdampf liefert daher ein Maß für die Anzahl der Atome des gesuchten Elements im Strahlengang des Meßlichtbündels und damit, nach geeigneter Eichung, ein Maß für die Konzentration des gesuchten Elements in der Probe.

Zur Atomisierung der Probe werden Öfen, üblicherweise aus Graphit, verwendet, in welche die Probenlösung eingebracht wird und die durch einen starken elektrischen Strom auf eine hohe Temperatur aufgeheizt werden. Dabei bildet sich in dem Inneren des Ofens eine "Atomwolkel" aus, durch welche das Meßlichtbündel durch fluchtende Öffnungen des Ofens hindurchgeleitet wird. Dies wird als "elektrothermische Atomisierung" bezeichnet.

Es sind aber auch Verfahren bekannt, bei denen in einem solchen Ofen, in welchem die Probe elektrothermisch atomisiert wird, eine Gasentladung erzeugt wird, durch welche die Probeatome zur Emission von charakteristischen Linienspektren angeregt werden.

Die Erfindung. bezieht sich auf einen Ofen für solche und ähnliche spektroskopische Zwecke.

Die Erfindung. betrifft ferner ein Verfahren zur Herstellung eines solchen Ofens.

## Zugrundeliegender Stand der Technik

Durch die DE-A-24 20 546 ist es bekannt, Öfen für die elektrothermische Zersetzung. von Proben, die aus einem Graphitrohr bestehen, mit einer Schicht aus Pyrokohlenstoff zu überziehen. Dadurch entsteht eine im Gegensatz zu reinem Graphit porenfreie Oberfläche. Es wird dadurch verhindert, daß Probenflüssigkeit in den Graphit einsik-kert. Durch ein solches Einsickern von Probenflüssigkeit in das Graphitrohr wird die Atomisierung von Teilen der Probe verzögert Darunter leidet die Empfindlichkeit und die Genauigkeit der Messung.

Pyrokohlenstoff ist ein Kohlenstoff, der durch thermische Zersetzung. von Kohlenstoffverbindungen auf der Oberfläche eines Graphitteiles, also hier eines Graphitofens, entsteht. Es sind verschiedene Verfahren zur Aufbringung einer Schicht von Pyrokohlenstoff auf der Oberfläche eines Graphitofens bekannt. Ein solches Verfahren ist in der DE-A-24 20 546 beschrieben. Andere Verfahren arbeiten mit gasförmigen Kohlenstoffverbindungen wie Methan. In einem Vakuum, in welchem die zu beschichtenden Teile angeordnet sind, wird von Argon als Trägergas Methan über die zu beschichtenden Oberflächen geleitet und dort zersetzt.

Es bietet in der Praxis oft Schwierigkeiten, eine gleichmäßige Beschichtung von Graphitöfen mit Pyrokohlenstoff zu erreichen. Das gilt insbesondere für das Innere des Hohlraumes, in den die Probe für die Atomisierung eingebracht wird, also beispielsweise die Bohrung eines Graphitrohres. Die Schichtdicke läßt sich schwer feststellen. Im allgemeinen zeigt sich eine zu geringe Schichtdicke erst im praktischen Betrieb, nämlich an einer frühzeitigen Verschlechterung der Analysenergebnisse. Die Pyrokohlenstoffschicht verschleißt im Gebrauch, so daß bei einer zu dünnen Pyrokohlenstoffschicht nach relativ wenigen Analysen die Probenflüssigkeit, wie geschildert, in dem nun nicht mehr ausreichend beschichteten Material des Graphitofens versickert.

Eine "Graphitrohrküvette", bei welcher der Graphitofen von einem in Längsrichtung von Strom durchflossenen Graphitrohr gebildet wird, ist in der DE-B-27 18 416 beschrieben.

Die EP-A2-0 311 761 zeigt einen aus einem Stück gebildeten Ofen für die elektrothermische Atomisierung von Proben mit einem rohrförmigen Ofenkörper, an welchem auf gegenüberliegenden Seiten längsverlaufende Kontaktrippen sitzen, an welche sich zylindrische Kontaktstücke anschließen. In der Bohrung des Ofenkörpers ist eine zylinderschalenförmige, sich über etwa $180°$ erstrekkende Plattform vorgesehen. Diese Plattform ist an den Ofenkörper angeformt, d.h. bildet mit diesem und den Kontaktrippen und Kontaktstücken einen integralen Bauteil aus Graphit. Gegenüber der Plattform weist der Ofenkörper eine Probeneinfüllöffnung auf.

Die Plattform hat den Zweck, die Erhitzung der auf die Plattform aufgebrachten Probe auf Atomisierungstemperatur gegenüber der Aufheizung der Ofenwandung zu verzögern, so daß sich in dem Ofen schon ein thermisches Gleichgewicht eingestellt hat, wenn die Probe schließlich atomisiert
wird. Das wird dadurch erreicht, daß die Probe auf
der Plattform im wesentlichen indirekt durch Wärmestrahlung von der Ofenwandung erhitzt wird.

Durch das DE-U-89 01 529.0 ist ein ebenfalls
aus einem Stück gebildeter Ofen ähnlich dem vorstehend geschilderten bekannt, bei welchem die an
den Ofen angeformte zylinderschalenförmige Plattform mit dem Ofenkörper über einen schmalen
Steg verbunden ist, der an einer Seite der Plattform und nur auf einer Seite der Längsmittelebene
der Plattform angeordnet ist.

Bei der Herstellung von Öfen nach der EP-A-0
311 761 oder dem DE-U-89 01 529.0 tritt relativ
viel Ausschuß bei der Bearbeitung der angeformten
Plattform auf. Außerdem bietet bei solchen Öfen
mit komplexen Strukturen die Beschichtung mit
Pyrokohlenstoff ganz besondere Probleme.

Die Veröffentlichung von Donald S. Forsyth
unter dem Titel "Design and Evaluation of a Capillary Gas Chromatography-Atomic Absorption Spectrometer Interface" in Analyt. Chem. 59, 1742 bis
1744 (1987) betrifft eine in ihrer Längsmittelebene
geteilte Heizvorrichtung zur Aufnahme eines Quarzrohres, das als Atomisierungsgefäß dient. Die Heizvorrichtung enthält in Aluminium-Halbschalen gehalterte Halbschalen aus feuerfestem Material, in
deren eine eine Heizwicklung eingebettet ist.

In Figuren 2 bis 5 der DE-A- 2 219 617 ist eine
Atomisierungsvorrichtung aus zwei aneinander anliegenden Graphitbändern dargestellt, die gegeneinander verschiebbar oder verschwenkbar sind.
Dadurch wird ein von einer Ausbeulung in einem
der beiden Graphitbänder gebildeter Hohlraum freigegeben, aus dem eine atomisierte Probe in den
eigentlichen Meßraum übergeht.

Die DD-A-157 280 betrifft ein quer zur Längsachse geteiltes Graphitrohr, dessen Rohrabschnitte
lösbar ineinander gesteckt sind. Am inneren Ende
des einen Rohrabschnittes befindet sich eine ringförmige Erweiterung, in der die Probe aufgenommen wird und die zusammen mit dem inneren
Ende des anderen Rohrabschnittes eine Ringkammer bildet, die durch einen stufenförmigen Ringkanal mit dem Innenraum des Graphitrohres verbunden ist.

## Offenbarung der Erfindung

Der Erfindung liegt die Aufgabe zugrunde, einen Ofen der eingangs genannten Art so auszubilden, daß er sich leicht fertigen läßt.

Insbesondere soll bei Öfen mit angeformter
Plattform der Ausschuß verringert und die Beschichtung mit Pyrokohlenstoff vereinfacht werden.

Erfindungsgemäß wird diese Aufgabe dadurch gelöst, daß der Ofen aus zwei Hälften besteht, die
längs einer den Hohlraum schneidenden Trennfläche aneinandergesetzt sind.

Dabei kann der Ofen aus Graphit bestehen und
mit einer Beschichtung versehen sein, insbesondere einer Beschichtung aus pyrolytischem Graphit.

Es kann eine Plattform zur Aufnahme der Probe als integraler Teil an eine der beiden Hälften
angeformt sein. Dabei kann dann der Ofen einen
rohrförmigen Ofenteil aufweisen, der auf gegenüberliegenden Seiten Kontaktstücke trägt, die sich
senkrecht zur Achse des Ofenteils erstrecken und
über welche ein elektrischer Strom in Umfangsrichtung durch den Ofenteil hindurchleitbar ist, wobei
die Achsen der Kontaktstücke und des Ofenteils in
einer Ebene liegen. Der Ofen ist dann längs dieser
die Achsen enthaltenden Ebene geteilt. Die beiden
Hälften des Ofens werden durch Ringe zusammengehalten, die auf die Kontaktstücke aufgeschoben
sind. Zwischen den im wesentlichen zylindrischen
Kontaktstücken und dem Ofenteil sind trapezförmige Kontaktrippen angeformt. In den Kontaktrippen
sind um die Kontaktstücke herum Nuten gebildet,
in welche die zylindrischen Ringe hineinragen.

Ein Verfahren zur Herstellung eines Ofens der
vorstehend beschriebenen Art umfaßt die Verfahrensschritte:

(a) Herstellung zweier Rohteile, die mit planen
Flächen aneinanderliegen,

(b) Bearbeiten der beiden Rohteile gemeinsam,
so daß ein von den Ebenen der planen Flächen
geschnittener Hohlraum und aus jedem der
Rohteile eine Ofenhälfte erzeugt wird.

(c) Trennen der beiden so hergestellten Ofenhälften,

(d) Beschichten der Ofenhälften in auseinandergenommenem Zustand, wobei die Innenfläche
des Hohlraumes Außenflächen jeder der beiden
Hälften bildet, und

(e) Zusammensetzen so erzeugter Ofenhälften
zu einem Ofen.

Auf diese Weise erfolgt die Beschichtung der
Innenflächen des Ofens, während sie frei zugänglich sind, also Außenflächen der Ofenhälften bilden.
Damit kann eine bessere und gleichmäßigere Beschichtung erreicht weren.

Zur Verringerung von Ausschuß bei Öfen mit
integrierter Plattform kann die Fertigung in der
Weise erfolgen, daß erste aneinandergesetzte Paare von Rohteilen so bearbeitet werden, daß in dem
Hohlraum jedes Paares zwei zylinderschalenförmige Plattformen gebildet werden, von denen die
eine an der einen und die andere an der anderen
Ofenhälfte angeformt ist, zweite aneinandergesetzte Paare von Rohteilen zur Bildung von Ofenhälften
so bearbeitet werden, daß der Hohlraum jedes Paares eine durchgehende Bohrung ohne angeformte
Plattform bildet, und zur Bildung eines Ofens jeweils eine Ofenhälfte, die aus einem Rohteil eines ersten Paares von Rohteilen hergestellt ist, und eine Ofenhälfte, die aus einem Rohteil eines zweiten Paares von Rohteilen hergestellt ist, zusammengesetzt werden.

Die Fertigung zweier Ofenhälften mit angeformter Plattform erfordert praktisch die gleichen Arbeitsgänge wie die Fertigung eines vollständigen Ofens mit einer angeformten Plattform.

Wenn bei den Rohteilen, aus denen Ofenhälften mit angeformten Plattformen hergestellt werden, bei der Bearbeitung der Plattform Ausschuß entsteht, dann entsteht dieser Ausschuß normalerweise nur an einer Ofenhälfte. Die andere Ofenhälfte ist verwendbar und kann mit einer anderen Ofenhälfte ohne Plattform kombiniert werden. Ausschußteile mit angeformter Plattform können ggf. zu Ofenhälften ohne angeformte Plattform nachgearbeitet werden. Die Ofenhälften ohne angeformte Plattform können entsprechend der statistischen Ausschußrate bei Ofenhälften mit angeformter Plattform in einer verminderten Stückzahl hergestellt werden.

Ein Ausführungsbeispiel der Erfindung ist nachstehend unter Bezugnahme auf die zugehörigen Zeichnungen näher erläutert

## Kurze Beschreibung der Zeichnungen

Fig.1 zeigt eine Draufsicht auf eine Ofenhälfte eines querbeheiztem Ofens mit angeformter Plattform
Fig .2 zeigt einen Schnitt längs der Linie A - B von Fig. 1.
Fig.3 zeigt einen Schnitt längs der Linie C - D von Fig.1, wobei zusätzlich die obere Ofenhälfte ohne angeformte Plattform zusammen mit einem Ring zur Verbindung der Ofenhälften dargestellt ist.
Fig.4 ist eine Ansicht der unteren Ofenhälfte in Richtung des Pfeiles 'X" von Fig. 2.
Fig.5 zeigt in einem Schnitt ähnlich Fig.3 Ofenhälften ohne angeformte Plattform.

## Bevorzugte Ausführung der Erfindung

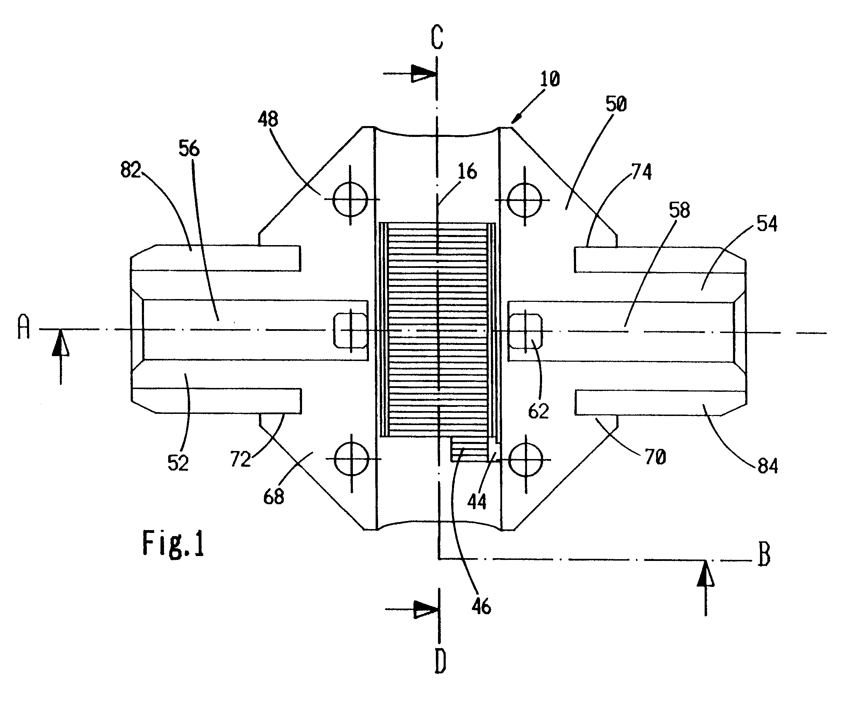

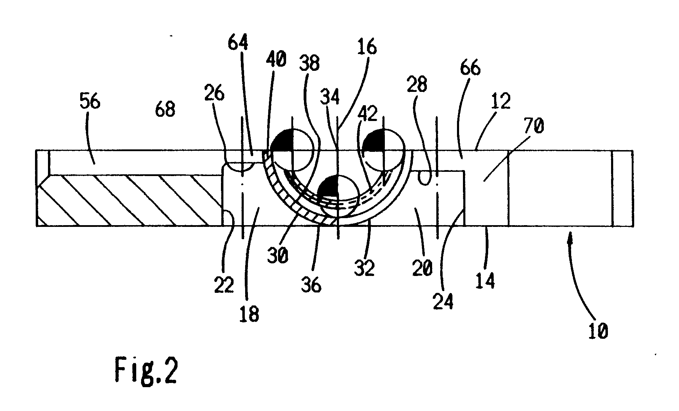

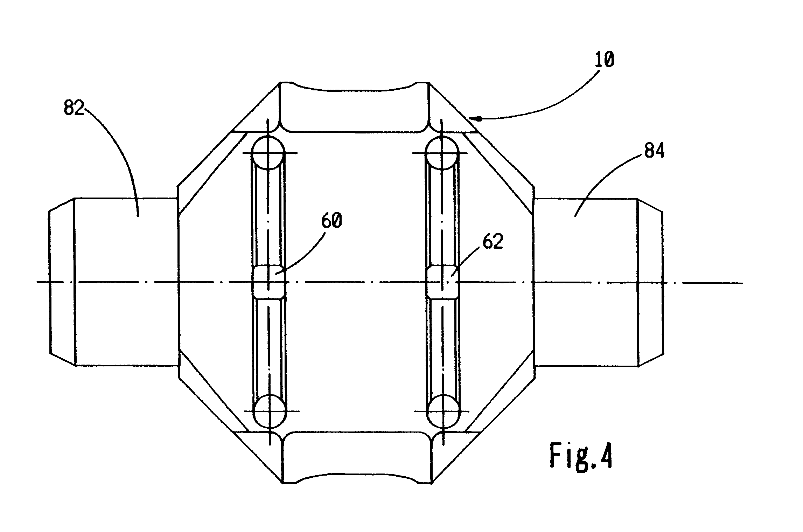

In Fig. 1 bis 4 ist eine untere Ofenhälfte 10 aus einer Graphitplatte hergestellt, die eine obere Planfläche 12 und eine untere Planfläche 14 aufweist. Auf der Unterseite der Graphitplatte sind symmetrisch zu einer Mittelebene 16 Ausnehmungen 18 und 20 (Fig.2) angebracht, die von je einer senkrecht zu den Planflächen 12 und 14 verlaufenden Fläche 22 bzw. 24, einer parallel zu der Planfläche 14 verlaufenden Fläche 26 bzw. 28 und einer konvexzylindrischen Fläche 30 bzw. 32 begrenzt sind. Die beiden konvex-zylindrischen Flächen ergänzen sich zu einer halbzylindrischen Außenfläche 36, deren Achse 34 von der Schnittlinie der Planfläche 12 und der Mittelebene 16 gebildet ist.

Auf der Oberseite der Platte ist eine zylindrische Ausnehmung 38 koaxial zu der Außenfläche 36 angebracht. Es wird so ein Halbrohr 40 gebildet, das die Hälfte eines rohrförmigen Ofenkörpers darstellt.

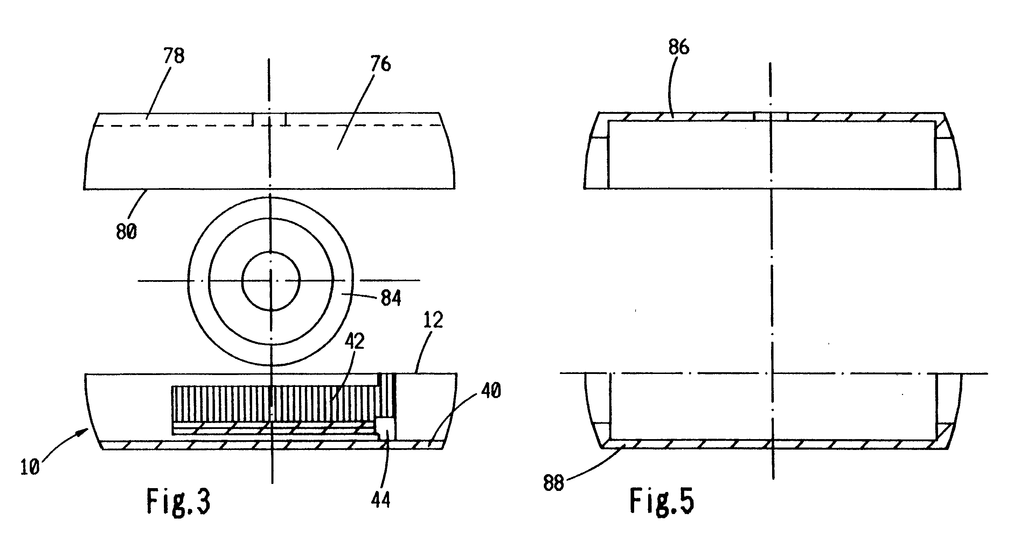

Konzentrisch innerhalb dieses Halbrohres 40 ist eine zylinderschalenförmige Plattform 42 angeordnet. Die Plattform 42 ist an das Halbrohr 40 angeformt. Wie aus Fig.1 und 3 ersichtlich ist, ist die Plattform 42 mit dem Halbrohr nur über einen Steg 44 verbunden. Dieser Steg 44 sitzt an einem axialen Ansatz 46 an einem Ende der Plattform 42 und ist nur auf einer Seite der Längsmittelebene 16 mit dem Halbrohr 40 verbunden.

An das Halbrohr 40 schließen sich beiderseits Kontaktrippen 48 und 50 an. Die Kontaktrippen 48 und 50 sind in Draufsicht trapezförmig. An die Kontaktrippen 48 und 50 schließen sich Kontaktstücke 52 bzw. 54 an. Die Kontaktstücke 52 und 54 sind halbzylindrisch. Die fluchtenden Achsen der zylindrischen Mantelflächen der Kontaktstücke liegen in der planen Fläche 12 und verlaufen senkrecht zu der Achse 34 des Halbrohres 40. In den planen Flächen der halbzylindrischen Kontaktstücke 52 und 54 sind ebenfalls halbzylindrische axiale Nuten 56 bzw. 58 angebracht. Die Nuten 56 und 58 enden vor der Außenfläche 36 des Halbrohres 40 und schneiden die Ausnehmungen 18 bzw. 20 in Durchgangsöffnungen 60 bzw. 62 an.

Durch die Ausnehmungen 18 und 20 ist das Halbrohr 40 längs seiner Ränder über relativ dünne Brücken 64 und 66 mit den dickeren Teilen 68 bzw. 70 der Kontaktrippen 48 bzw. 50 verbunden. An diesen dickeren Teilen 68 und 70, deren Dicke denen der Platte entspricht, aus der die Ofenhälfte hergestellt wird, sitzen die Kontaktstücke 52 und 54. In den dickeren Teilen 68 und 70 der Kontaktrippen 48 und 50 sind rings um die Kontaktstücke 52 herum Ringnuten 72 bzw. 74 angebracht.

Eine "obere" Ofenhälfte 76 ist im wesentlichen identisch mit der beschriebenen "unteren" Ofenhälfte 10. Diese obere Ofenhälfte weist jedoch keine angeformte Plattform 42 auf. Das Halbrohr 78 (Fig.3) ist innen durchgehend glatt zylindrisch. Die obere Ofenhälfte 76 weist eine plane Fläche 80 entsprechend der planen Fläche 12 auf.

Um einen Ofen zu bilden, werden eine untere Ofenhälfte 10 und eine obere Ofenhälfte 76 mit den planen Flächen 12 und 80 aufeinandergesetzt. Auf die Kontaktstücke 52 und 54 werden zylindrische Ringe 82 bzw. 84 aufgeschoben. Die zylindrischen Ringe 82 und 84 ragen bis in die Ringnuten 72 und 74 hinein. Dadurch werden die beiden Ofenhälften auf einem großen Teil ihrer Länge formschlüssig zusammengehalten.

Fig.5 zeigt in einer Darstellung ähnlich Fig.3 einen Ofen, der aus zwei gleichen Ofenhälften 86 und 88 ohne angeformte Plattform besteht.

Die Ofenhälften sind mit Pyrokohlenstoff beschichtet.

Die Herstellung der Öfen erfolgt folgendermaßen:

Es werden zwei Rohteile in Form der erwähnten Platten mit den planen Flächen 12 und 80 aufeinandergelegt und miteinander verklammert. Dann werden die Platten gemeinsam bearbeitet. Dabei werden aber bei diesen Paaren von Platten entweder beide Ofenhälften mit angeformten Plattformen 40 versehen oder keine der beiden Ofenhälften. Die Fertigung von einer Plattform oder von zwei Plattformen erfordert praktisch den gleichen Aufwand.

Die so erhaltenen Ofenhälften werden auseinandergenommen und nach einem bekannten Verfahren mit Pyrokohlenstoff beschichtet. Die Beschichtung der Ofenhälften insbesondere in dem kritischen Bereich der Plattformen und der Innenwandungen der Bohrungen kann durch die Teilung leichter erfolgen als bei den bekannten Öfen, da die Plattformen und Innenwandungen bei den Ofenhälften äußere Oberflächen darstellen, die leicht zugänglich sind und deren Beschichtung keine Schwierigkeiten bereitet. Anschließend werden jeweils eine "untere" Ofenhälfte 10 mit angeformter Plattform 40 und eine "obere" Ofenhälfte 76 aufeinandergesetzt und durch Aufschieben der Ringe 82 und 84 miteinander verbunden.

Statt einer Verbindung durch die Ringe 82,84 kann auch eine Verbindung durch Verkleben vorgesehen sein. Es ist auch möglich, die Ofenhälften getrennt zu lassen und im Betrieb durch die Kontakte, zwischen denen der Ofen im Gerät gehalten wird, mit den konischen Kontaktflächen zusammenzudrücken. Dieses Verfahren ist insbesondere bei Graphitrohren herkömmlicher Art anwendbar, die mit ihren Stirnflächen zwischen ringförmigen Kontakten gehalten und in Längsrichtung von dem Strom durchflossen werden. Auch solche Öfen können nämlich vorteilhaft aus zwei Ofenhälften zusammengesetzt sein.

**Ansprüche**

1. Ofen zur elektrothermischen Atomisierung von Proben für spektroskopische Zwecke, der einen Hohlraum zur Aufnahme der Probe aufweist, **dadurch gekennzeichnet, daß** der Ofen aus zwei Hälften (10,76) besteht, die entlang einer den Ofen und Hohlraum in Längsrichtung schneidenden Trennfläche (12,80) aneinandergesetzt sind.

2. Ofen nach Anspruch 1, **dadurch gekennzeichnet, daß** der Ofen aus Graphit besteht und mit einer Beschichtung versehen ist.

3. Ofen nach Anspruch 2, **dadurch gekennzeichnet, daß** jede der beiden Hälften des Ofens mit einer Beschichtung aus pyrolytischem Graphit versehen ist.

4. Ofen nach einem der Ansprüche 1 bis 3, **dadurch gekennzeichnet, daß** eine Plattform (42) zur Aufnahme der Probe als integraler Teil an eine der beiden Hälften (10) angeformt ist.

5. Ofen nach einem der Ansprüche 1 bis 4, **dadurch gekennzeichnet, daß**

(a) der Ofen einen rohrförmigen Ofenteil (40) aufweist, der auf gegenüberliegenden Seiten Kontaktstücke (52,54) trägt, die sich senkrecht zur Achse (34) des Ofenteils (40) erstrecken und über welche ein elektrischer Strom in Umfangsrichtung durch den Ofenteil hindurchleitbar ist, wobei die Achsen der Kontaktstücke (56,58) und des Ofenteils (40) in einer Ebene liegen, und

(b) die Trennfläche den Ofen in dieser die Achsen enthaltenden Ebene schneidet.

6. Ofen nach Anspruch 5, **dadurch gekennzeichnet, daß** die beiden Hälften (10,76) des Ofens durch Ringe (82,84) zusammengehalten werden, die auf die Kontaktstücke (52,54) aufgeschoben sind.

7. Ofen nach Anspruch 6, **dadurch gekennzeichnet, daß**

(a) zwischen den im wesentlichen zylindrischen Kontaktstücken (52,54) und dem Ofenteil (40) trapezförmige Kontaktrippen (48,50) angeformt sind und

(b) in den Kontaktrippen (48,50) um die Kontaktstücke (52,54) herum Nuten (72,74) gebildet sind, in welche die zylindrischen Ringe (82,84) hineinragen.

8. Verfahren zur Herstellung eines Ofens nach Anspruch 1, **gekennzeichnet durch die Verfahrensschritte:**

(a) Herstellung zweier Rohteile, die mit planen Flächen aneinanderliegen, und

(b) Bearbeiten der beiden Rohteile gemeinsam, so daß ein von den Ebenen der planen Flächen geschnittener Hohlraum und aus jedem der Rohteile eine Ofenhälfte (10,76) erzeugt wird.

9. Verfahren nach Anspruch 8, **gekennzeichnet durch die weiteren Verfahrensschritte**

(c) Trennen der beiden so hergestellten Ofenhälften (10,76),

(d) Beschichten der Ofenhälften (10,76) in auseinandergenommenem Zustand, wobei die Innenfläche des Hohlraumes Außenflächen jeder der beiden Ofenhälften (10,76) bildet, und

(e) Zusammensetzen so erzeugter Ofenhälften (10,76) zu einem Ofen.

10. Verfahren nach Anspruch 8 oder 9, **dadurch gekennzeichnet, daß**

(a) erste aneinandergesetzte Paare von Rohteilen so bearbeitet werden, daß in dem Hohlraum jedes Paares zwei zylinderschalenförmige Plattformen (42) gebildet werden, von denen die eine an der einen und die andere an der anderen Ofenhälfte angeformt ist,

(b) zweite aneinandergesetzte Paare von Rohteilen zur Bildung von Ofenhälften so bearbeitet werden, daß der Hohlraum jedes Paares eine durchgehende Bohrung ohne angeformte Plattform bildet, und

(c) zur Bildung eines Ofens jeweils eine Ofenhälfte (10), die aus einem Rohteil eines ersten Paares von Rohteilen hergestellt ist, und eine Ofenhälfte (76), die aus einem Rohteil eines zweiten Paares von Rohteilen hergestellt ist, zusammengesetzt werden.

Fig.1

Fig.2

EP 0 408 872 A2

Fig.3

Fig.5

EP 0 408 872 A2

Fig.4

EP 0 408 872 A2